# EUROPEAN PATENT APPLICATION

(11) **EP 2 214 129 A2**
(43) Date of publication of application: **04.08.2010**
(21) Application number: 10151072.5
(22) Date of filing: 19.01.2010
(51) Int. Cl.: G06Q 10/00

(54) **System and method for effectively utilizing a transport structure in an electronic network**

(30) Priority: 29.01.2009 US 322161
(71) Applicant: Sony Corporation, Minato-ku Tokyo 108-0075 (JP); Sony Electronics Inc., Park Ridge, NJ 07656 (US)
(72) Inventor: Loughery III, Donald L., Long Beach, CA 90803 (US); Frazier, Milton, San Marcos, CA 92069 (US); Rainier, Rajiv, San Diego, CA 92127 (US); Jacobs, Stephen, Ardsley, NY 10022 (US); Noronha, Austin, Sunnyvale, CA 92086 (US); Smith, Tim, Carlsbad, CA 92011 (US)
(74) Representative: Jackson, Jonathan Andrew

(57) **Abstract**

A system and method for effectively utilizing a transport structure in an electronic network includes user devices that device users utilize to communicate with an information service for receiving information distribution services. Transport structures communicate with the user devices through the electronic network to collect various relevant types of metadata that is then utilized for providing selected information from the information service to targeted ones of the device users. A transport server coordinates functions of the transport structures by providing task instructions and navigation instructions for effectively operating the transport structures.

## Description

This invention relates generally to a system and method for effectively utilizing a transport structure in an electronic network.

Implementing effective methods for distributing electronic information is a significant consideration for designers and manufacturers of contemporary electronic systems. However, effectively distributing electronic information utilized by electronic devices may create substantial challenges for system designers. For example, enhanced demands for increased device functionality and performance may require more system processing power and require additional software resources. An increase in processing or software requirements may also result in a corresponding detrimental economic impact due to increased production costs and operational inefficiencies.

Furthermore, enhanced system capability to perform various advanced distribution operations may provide additional benefits to a system user, but may also place increased demands on the control and management of various system components. For example, an electronic system that effectively manages electronic advertising information may benefit from an effective implementation because of the large amount and complexity of the digital data involved.

Due to growing demands on system resources and substantially increasing data magnitudes, it is apparent that developing new techniques for distributing electronic information to electronic devices is a matter of concern for related electronic technologies. Therefore, for all the foregoing reasons, developing effective techniques for distributing electronic information remains a significant consideration for designers, manufacturers, and users of contemporary electronic devices.

In accordance with an embodiment of the present invention, a system and method for effectively utilizing a transport structure in an electronic network are disclosed. In one embodiment, a distribution system automatically provides various types of appropriate information for utilization by device users of corresponding user devices. For example, the distributed information may include, but is not limited to, commercial advertising information that is targeted towards specific device users. Unlike traditional advertising techniques that support a "pull" model that requires consumers to actively access desired advertising information, the foregoing distribution system supports a "push" model that automatically selects and transmits appropriate advertising information to targeted device users based upon corresponding metadata files that define both the device users and the various advertisers.

In one embodiment, the distribution system may support and utilize one or more transport structures that automatically transport various types of relevant information to and from appropriate entities in the distribution system. For example, the transport structures may be utilized to gather and transfer metadata regarding the various device users, the user devices, the electronic network, and respective advertisers from an information service. In addition, the transport structures may also be utilized to transport targeted advertisements and/or electronic content to appropriate user devices.

In certain embodiments, the transport structures may periodically communicate with a transport server of the distribution system to determine whether there are any new instructions or information for operating the transport structures. For example, the new instructions may include, but are not limited to, specific task instructions and/or navigation instructions for the transport structures. If one or more new instructions exist, then the transport server may perform an update procedure to update the transport structures with new instructions or other required information. For at least the foregoing reasons, the present invention therefore provides an improved system and method for effectively utilizing a transport structure in an electronic network.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
FIG. 1 is a block diagram of a distribution system, in accordance with one embodiment of the present invention;
FIG. 2 is a block diagram for one embodiment of a transport structure, in accordance with the present invention;
FIG. 3 is a block diagram for one embodiment of a user device from FIG. 1, in accordance with the present invention;
FIG. 4 is a block diagram for one embodiment of the user memory from FIG. 3, in accordance with the present invention;
FIG. 5 is a block diagram for one embodiment of the information service from FIG. 1, in accordance with the present invention;
FIG. 6A is a block diagram for one embodiment of the transport server from FIGS. 5, 7A, and 7B, in accordance with the present invention;
FIG. 6B is a block diagram for one embodiment of the transport server memory from FIG. 6A, in accordance with the present invention;
FIG. 7A is a block diagram for an alternate embodiment of the information service from FIG. 1, in accordance with the present invention;
FIG. 7B is a block diagram for an alternate embodiment of the information service from FIG. 1, in accordance with the present invention;
FIG. 8 is a block diagram for one embodiment of the ad server from FIGS. 5, 7A, and 7B, in accordance with the present invention;
FIG. 9 is a block diagram for one embodiment of the metadata file from FIG. 2, in accordance with the present invention;
FIG. 10 is a flowrchart of method steps for utilizing a transport structure, in accordance with one embodiment of the present invention; and
FIG. 11 is a flowchart of method steps for maintaining a transport structure, in accordance with one embodiment of the present invention.

The present invention relates to an improvement in electronic data distribution techniques. The following description is presented to enable one of ordinary skill in the art to make and use the invention, and is provided in the context of a patent application and its requirements. Various modifications to the disclosed embodiments will be apparent to those skilled in the art, and the generic principles herein may be applied to other embodiments. Therefore, the present invention is not intended to be limited to the embodiments shown, but is to be accorded the widest scope consistent with the principles and features described herein.

The present invention comprises a system and method for effectively utilizing a transport structure in an electronic network, and includes user devices that device users utilize to communicate with an information service for receiving information distribution services. Transport structures communicate with the user devices through the electronic network to collect various relevant types of metadata that is then utilized for providing selected information from the information service to targeted ones of the device users. A transport server coordinates functions of the transport structures by providing task instructions and navigation instructions for effectively operating the transport structures.

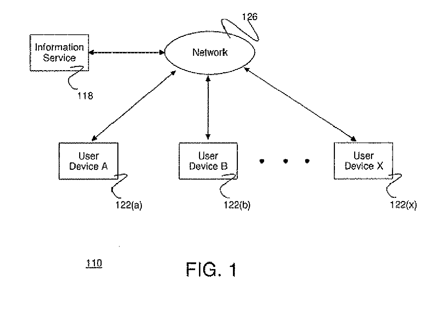

Referring now to FIG. 1, a block diagram of a distribution system 110 is shown, in accordance with one embodiment of the present invention. In the FIG. 1 embodiment, distribution system 110 may include, but is not limited to, one or more user devices 122, an information service 118, and a network 126. In alternate embodiments, distribution system 110 may be implemented by utilizing components and configurations in addition to, or instead of, certain of those components and configurations discussed in conjunction with the FIG. 1 embodiment.

In accordance with the present invention, distribution system 110 advantageously supports a distribution procedure that automatically provides various types of appropriate information for utilization by device users of corresponding user devices 122. For example, the distributed information may include, but is not limited to, commercial advertising information that is specifically targeted towards appropriate device users of user devices 122. Unlike traditional advertising techniques that support a "pull" model that requires consumers to actively access desired advertising information, the FIG. 1 distribution system 110 supports a "push" model that automatically selects and transmits appropriate advertising information to targeted device users based upon corresponding metadata that defines both the device users and the various advertisers. In the FIG. 1 embodiment, distribution system 110 may be implemented and supported by a distribution control entity that offers distribution services to both advertisers and device users in return for financial or other compensation. The distribution control entity may be a commercial enterprise that maintains and controls key elements of distribution system 110 such as the information service 118.

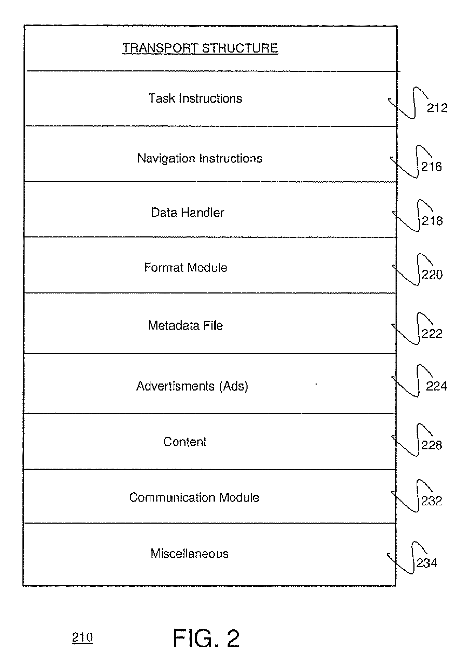

In accordance with the present invention, distribution system 110 may advantageously support and utilize one or more transport structures (see FIG. 2) that automatically transport various types of relevant information to and from appropriate entities in distribution system 110. For example, the transport structures may be utilized to gather and transfer metadata regarding the various device users, the user devices 122, the network 126, and respective advertisers from information service 118. In addition, the transport structures may also be utilized to transport targeted advertisements and/or electronic content to appropriate user devices 122. The present invention thus proves an improved system and method for utilizing a transport structure to perform a distribution procedure. Further details regarding the implementation and utilization of transport structures in the FIG. 1 distribution system 110 are discussed below in conjunction with FIGS. 2-11.

Referring now to FIG. 2, a block diagram for one embodiment of a transport structure 210 is shown, in accordance with the present invention. The FIG. 2 embodiment is presented for purposes of illustration, and in alternate embodiments, transport structures 210 may be implemented by utilizing components and configurations in addition to, or instead of, certain of those components and configurations discussed in conjunction with the FIG. 2 embodiment.

In the FIG. 2 embodiment, task instructions 212 may include any appropriate instructions or other information that indicate specific tasks, operations, functions, or steps for performance by transport structure 210. For example, in certain embodiments, task instructions 212 may include detailed instructions describing the type of information that transport structure 210 is directed to collect and/or distribute. In the FIG. 2 embodiment, navigation instructions 216 may include any appropriate instructions or other information that provide specific navigational directions or limitations for transport structure 210. For example, in certain embodiments, navigation instructions 216 may define at least one navigation path that is defined by one or more origin points and one or more destination points.

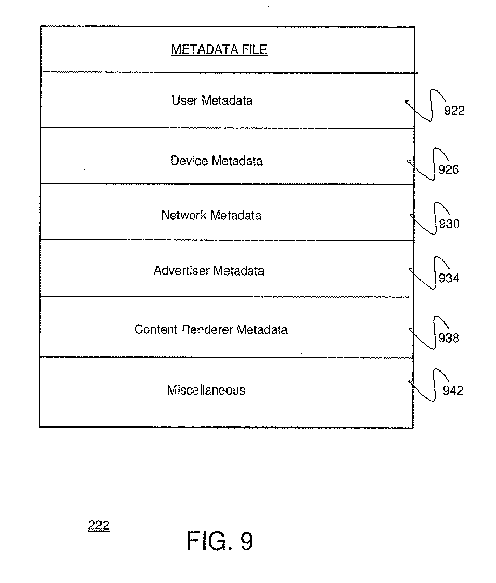

In the FIG. 2 embodiment, data handler 218 may include any appropriate means for allowing transport structure 210 to bi-directionally communicate with other devices in distribution system 110 (FIG. 1) for uploading or downloading desired information. In the FIG. 2 embodiment, transport structure 210 may utilize format module 220 to allow transport structure 210 to successfully communicate and utilize any different type of data or transmission formats, paths, or architectures. In the FIG. 2 embodiment, metadata file 222 may include any type of collected and modifiable information related to any relevant entities coupled to distribution system 110. Additional details regarding metadata file 222 are further discussed below in conjunction with FIG. 9.

In the FIG. 2 embodiment, advertisements (ads) 224 may include any appropriate type of targeted advertising information that has been selected for transmission to appropriate ones of the user devices 122 (FIG. 1). Similarly, content 228 may include any appropriate type of electronic content information that has been selected for transmission to appropriate ones of the user devices 122. For example, content 228 may include, but is not limited to, video data, audio data, graphics, text, movies, music recordings, and computer programs.

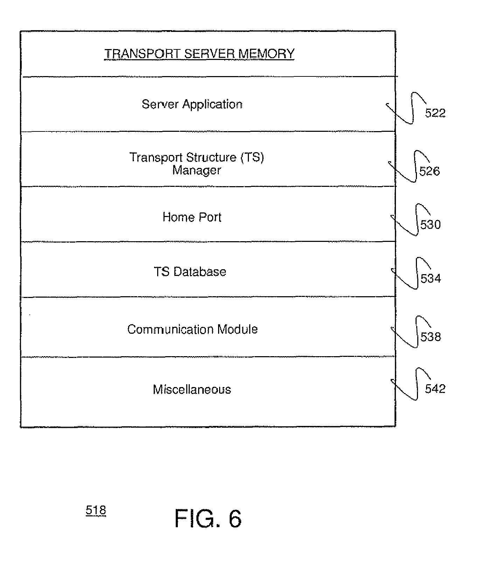

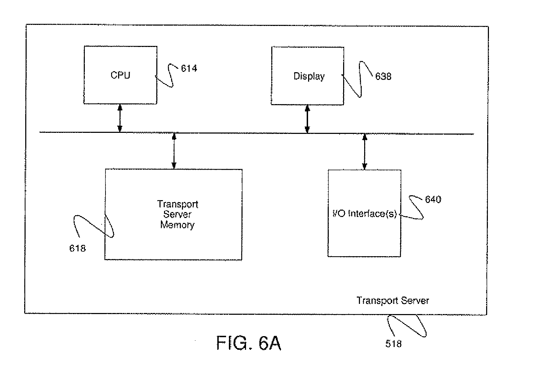

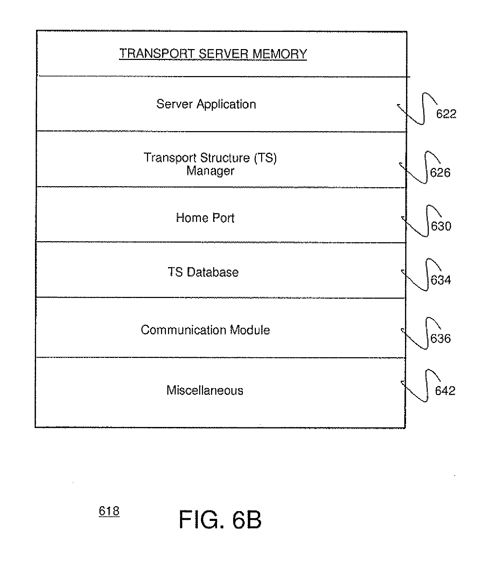

In the FIG. 2 embodiment, transport structure 210 may utilize communication module 232 for performing bi-directional electronic communication procedures with remote devices in distribution system 110. For example, in certain embodiments, communication module 232 may be utilized to communicate with a transport server (see FIG. 6) of information service 118. In the FIG. 2 embodiment, miscellaneous 234 information may include any additional information or data for utilization or for transfer by transport service 210.

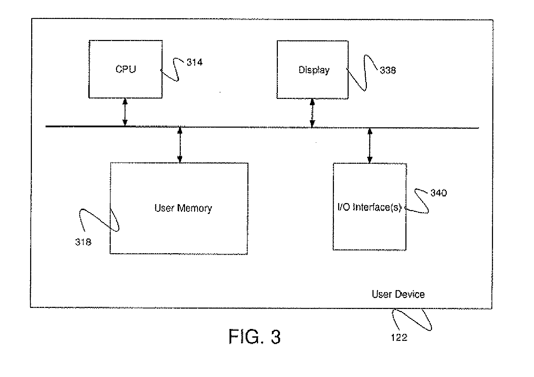

Transport structures 210 may be originated in any effective manner from any appropriate source. For example, transport structures 210 may be embedded in user devices 122 (FIG. 1), and activated by device users if desired. Alternately, various entities in network 126 or information service 118 may create or activate transport structures 210. For example, a transport server (see FIG. 6A) may manage the origination and operation of transport structures 210. Further details regarding the implementation and utilization of the FIG. 2 transport structure 210 are discussed below in conjunction with FIGS. 3-11.

Referring now to FIG. 3, a block diagram for one embodiment of a FIG. 1 user device 122 is shown, in accordance with the present invention. In the FIG. 3 embodiment, user device 122 includes, but is not limited to, a central processing unit (CPU) 314, a memory 318, a display 338, and one or more input/output interface(s) (I/O interface(s)) 340. The FIG. 3 embodiment is presented for purposes of illustration, and in alternate embodiments, a user device 122 may be implemented using components and configurations in addition to, or instead of, certain of those components and configurations discussed in conjunction with the FIG. 3 embodiment. In addition, user device 122 may be implemented as any type of portable or non-portable electronic device, including, but not limited to, a desktop computer, a personal digital assistant, a cellular telephone, a settop box, or a laptop computer.

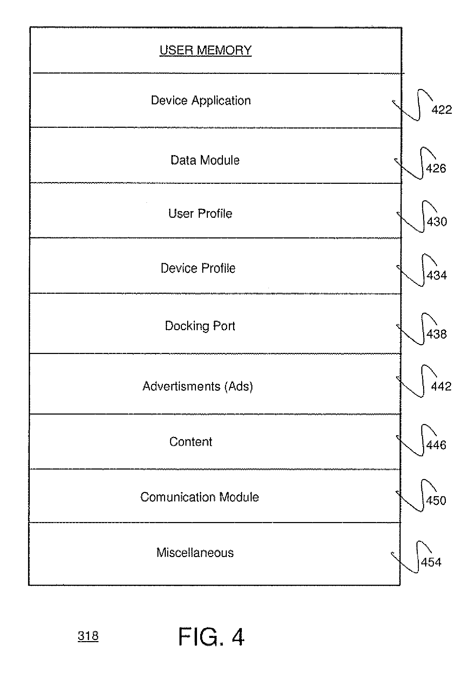

In the FIG. 3 embodiment, CPU 314 may be implemented to include any appropriate and compatible microprocessor device that preferably executes software instructions to thereby control and manage the operation of user device 122. The FIG. 3 display 338 may include any effective type of display technology including a cathode-ray-tube monitor or a liquid-crystal display device with an appropriate screen for displaying various information to a device user. In the FIG. 3 embodiment, I/O interface(s) 340 may include one or more input and/or output interfaces to receive and/or transmit any required types of information by user device 122. In the FIG. 3 embodiment, memory 318 may be implemented to include any combination of desired storage devices, including, but not limited to, read-only memory (ROM), random-access memory (RAM), and various types of non-volatile memory, such as floppy disks, memory sticks, compact disks, or hard disks. Additional details for the utilization of user device 122 are further discussed below in conjunction with FIGS. 4-11.

Referring now to FIG. 4, a block diagram for one embodiment of the FIG. 3 user memory 318 is shown, in accordance with the present invention. In alternate embodiments, user memories 318 may be implemented by utilizing components and configurations in addition to, or instead of, certain of those components and configurations discussed in conjunction with the FIG. 4 embodiment.

In the FIG. 4 embodiment, device application 422 may include program instructions that are preferably executed by CPU 314 to perform various functions and operations for user device 122. The particular nature and functionality of device application 422 typically varies depending upon factors such as the specific type and particular functionality of the corresponding user device 122. In the FIG. 4 embodiment, user device 122 utilizes data module 426 to manage a user profile 430 and a device profile 434 that collectively describe any desired attributes or characteristics related to user device 122 or a device user of user device 122. For example, user profile 430 may include, but is not limited to, information regarding a device user's name, gender, age, religion, hobbies, interests, occupation, marital status, residence, income, Internet browsing history, and credit-card transaction records. Similarly, device profile 434 may include, but is not limited to, a device type, a device manufacturer, supported device functionalities, and a device configuration.

In the FIG. 4 embodiment, docking port 438 may include any appropriate type of interface means to facilitate bi-directional communications between one or more transport structures 210 (FIG. 2) and a user device 122. In the FIG. 4 embodiment, advertisements (ads) 442 may include targeted advertising information that has been received from one or more transport structures 210 via distribution system 110 (FIG. 1) specifically for a device user of user device 122. Similarly, content 446 may include targeted electronic content information that has been received from one or more transport structures 210 via distribution system 110 (FIG. 1) specifically for a device user of user device 122.

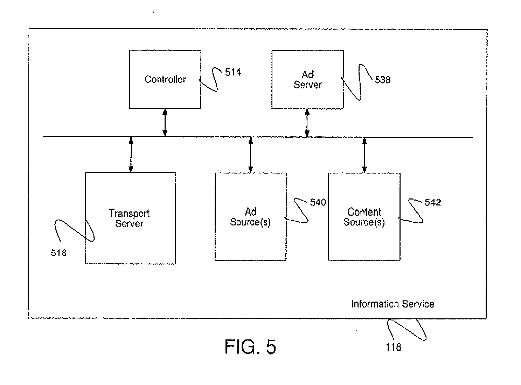

In the FIG. 4 embodiment, a user device 122 may utilize communication module 450 to perform bi-directional electronic communication procedures with any appropriate remote entity. In the FIG. 4 embodiment, miscellaneous information 454 may include any appropriate additional information or data for utilization by user device 122. For example, in certain embodiments, miscellaneous information 454 may include various types of metadata relating to other entities in distribution system 110 that was downloaded from one or more transport structures 210. Further details regarding the implementation and utilization of the FIG. 4 user memory 318 are discussed below in conjunction with FIGS. 5-11.

Referring now to FIG. 5, a block diagram for one embodiment of the FIG. 1 information service 118 is shown, in accordance with the present invention. In the FIG. 5 embodiment, information service 118 includes, but is not limited to, a controller 514, a transport server 518, an ad server 538, one or more ad sources 540, and one or more content sources 542. The FIG. 5 embodiment is presented for purposes of illustration, and in alternate embodiments, information service 118 may be implemented using components and configurations in addition to, or instead of, certain of those components and configurations discussed in conjunction with the FIG. 5 embodiment.

In the FIG. 5 embodiment, controller 514 may be implemented to include any effective control means for coordinating operating functionalities of information service 118. For example, in certain embodiments, controller 514 may be implemented as a computer device with a corresponding control application program that manages the operation of information service 118. Alternately, controller 514 may be implemented as a central processing unit that includes any appropriate and compatible microprocessor device for executing software instructions to thereby control and manage the operation of information service 118.

In the FIG. 5 embodiment, transport server 518 may include any effective means for communicating with and controlling one or more transport structures 210 (FIG. 2), in accordance with the present invention. Additional details regarding the implementation and utilization of transport server 518 are further discussed below in conjunction with FIGS. 6A and 6B. In the FIG. 5 embodiment, ad source(s) 540 may include one or more appropriate entities for providing advertisement information for dissemination by the transport structures 210 (FIG. 2) through distribution system 110 (FIG. 1). For example, ad sources 540 may include various commercial enterprises, specific advertisers, or advertising developers.

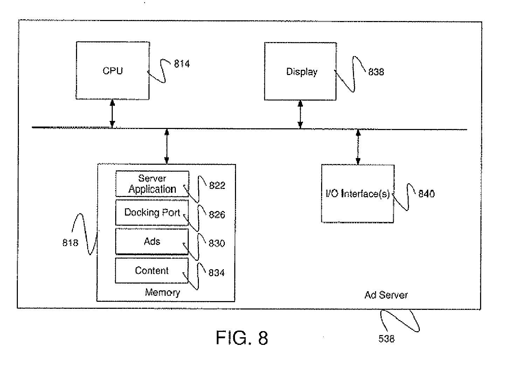

In the FIG. 5 embodiment, content source(s) 542 may include one or more appropriate entities for providing electronic content for dissemination by the transport structures 210 through distribution system 110. For example, content sources 542 may include various commercial enterprises, specific advertisers, or content producers. In the FIG. 5 embodiment, ad server 538 may include any effective means for identifying and aggregating appropriate advertising information and/or electronic content for providing to targeted device users of user devices 122 (FIG. 1) by utilizing one or more transport structures 210 (FIG. 2). One embodiment of ad server 538 is further discussed below in conjunction with FIG. 8. Additional details for the implementation and utilization of information service 118 are further discussed below in conjunction with FIGS. 6-11.

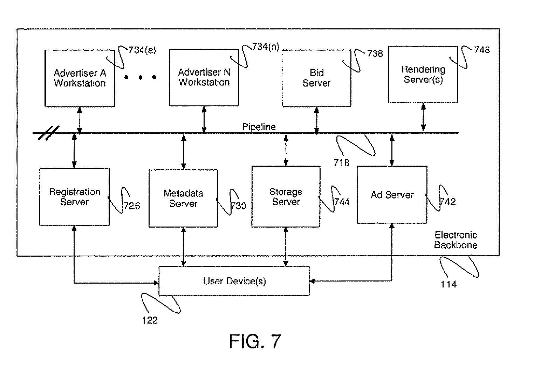

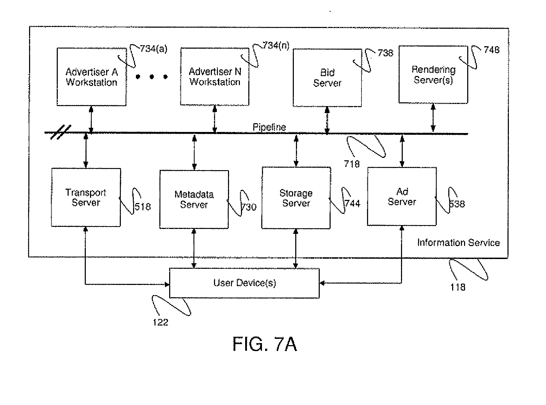

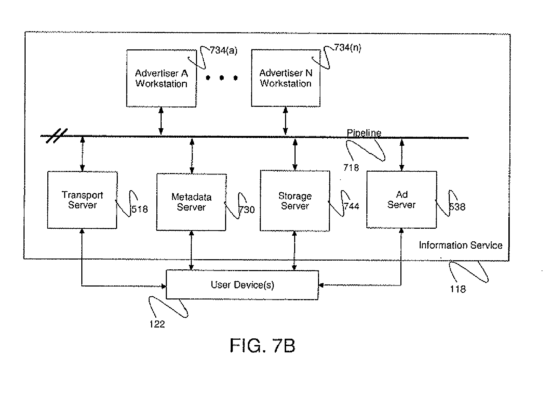

Referring now to FIG. 6A, a block diagram for one embodiment of the transport server 518 of FIGS. 5, 7A, and 7B is shown, in accordance with the present invention. In the FIG. 6A embodiment, transport server 518 includes, but is not limited to, a central processing unit (CPU) 614, a memory 618, a display 638, and one or more input/output interface(s) (I/O interface(s)) 640. The FIG. 6A embodiment is presented for purposes of illustration, and in alternate embodiments, transport servers 518 may be implemented using components and configurations in addition to, or instead of, certain of those components and configurations discussed in conjunction with the FIG. 6A embodiment.

In the FIG. 6A embodiment, CPU 614 may be implemented to include any appropriate and compatible microprocessor device that preferably executes software instructions to thereby control and manage the operation of transport server 518. The FIG. 6A display 638 may include any effective type of display technology including a cathode-ray-tube monitor or a liquid-crystal display device with an appropriate screen for displaying various information to a device user. In the FIG. 6A embodiment, I/O interface(s) 640 may include one or more input and/or output interfaces to receive and/or transmit any required types of information by user device 122. In the FIG. 6A embodiment, transport server memory 618 may be implemented to include any combination of desired storage devices, including, but not limited to, read-only memory (ROM), random-access memory (RAM), and various types of non-volatile memory, such as floppy disks, memory sticks, compact disks, or hard disks. Additional details regarding the implementation and utilization of transport server 518 are further discussed below in conjunction with FIGS. 6B-11.

Referring now to FIG. 6B, a block diagram for one embodiment of the FIG. 6A transport server memory 618 is shown, in accordance with the present invention. In the FIG. 6B embodiment, transport server memory 618 includes, but is not limited to, a server application 622, a transport structure (TS) manager 626, a home port 630, a transport structure (TS) database 634, a communication module 636, and miscellaneous information 642. In alternate embodiments, transport server memory 618 may be implemented by utilizing components and configurations in addition to, or instead of, certain of those components and configurations discussed in conjunction with the FIG. 6B embodiment.

In the FIG. 6B embodiment, server application 622 may include program instructions that are preferably executed by CPU 614 (FIG. 6A) to perform various functions and operations for transport server 518. The particular nature and functionality of server application 622 typically varies depending upon factors such as the specific type and particular functionality of the corresponding transport server 518.

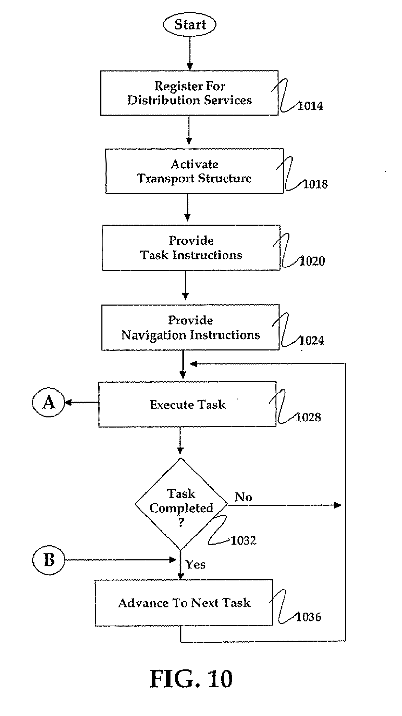

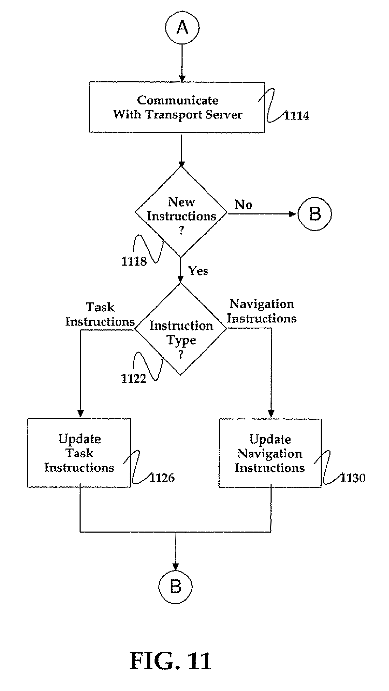

In the FIG. 6B embodiment, transport server 518 may utilize TS manager 626 to manage and coordinate various functions for one or more transport structures 210 (FIG. 2), in accordance with the present invention. Additional details regarding the utilization of TS manager 626 are further discussed below in conjunction with FIGS. 10 and 11. In certain embodiments, TS manager 626 may include a registration module for coordinating registration procedures to register device users of user devices 122 for participating in various authorized distribution services from distribution system 110 (FIG. 1). In the FIG. 6B embodiment, home port 630 may be utilized to connect to and bi-directionally communicate with transport structures 210.

In the FIG. 6B embodiment, TS database 634 may includes any appropriate information regarding the transport structures 210 that provide distribution services to various entities in distribution system 110. In certain embodiments, TS manager 626 may continually update respective transport structure information in TS database 634 to reflect the current status of transport structures 210 in distribution system 110. In the FIG. 6B embodiment, transport server 518 may utilize communication module 636 to perform bi-directional electronic communication procedures with any appropriate remote entity. For example, communication module 638 may be utilized to remotely communicate with transport structures 210 in distribution system 110. In the FIG. 6B embodiment, miscellaneous information 642 may include any appropriate additional information or data for utilization by transport server 518. Additional details regarding the utilization of the FIG. 6B transport server manager 626 to interact with transport structures 210 are discussed below in conjunction with FIGS. 10 and 11.

Referring now to FIG. 7A, a block diagram for an alternate embodiment of the FIG. 1 information service 118 is shown, in accordance with one embodiment of the present invention. In the FIG. 7A embodiment, information service 118 may include, but is not limited to, one or more user devices 122, a transport server 518, a metadata server 730, one or more advertiser workstations 734, a bid server 738, an ad server 538, a storage server 744, and one or more rendering servers 748. In the FIG. 7A embodiment, certain elements of information service 118 communicate through an electronic pipeline 718.

In alternate embodiments, information service 118 may be implemented by utilizing components and configurations in addition to, or instead of, certain of those components and configurations discussed in conjunction with the FIG. 7A embodiment. For example, in certain embodiments, some or all of the servers shown in the FIG. 7A embodiment may be implemented as respective banks of similar servers in order to accommodate a greater amount of data transmission and data processing by information service 118.

In the FIG. 7A embodiment, certain elements of distribution system 110 communicate through an electronic pipeline 718 that may be implemented in any effective manner. For example, pipeline 718 may be implemented as one or more system busses or electronic paths that support communications through distribution system 110 by utilizing any appropriate hard-wired or wireless techniques. In addition, in certain embodiments, pipeline 718 may be implemented by concurrently utilizing a plurality of different types of electronic communication methods.

During typical operation of the FIG. 7A information service 118, user devices 122 initially subscribe for distribution services from distribution system 110 by communicating with transport server 518 via any appropriate means. During the registration procedure, device users enter an agreement to allow distribution system 110 to collect and utilize certain specified user information that depends upon what level of privacy is preferred by the individual device users. The user devices 122 utilize a backbone library to create user metadata that defines the respective user information by utilizing a format and nomenclature that is consistent throughout distribution system 110. The user devices 122 then store the user metadata onto storage server 744.

In the FIG. 7A embodiment, advertisers utilize respective advertiser workstation A (734(a)) through advertiser workstation N (734(n)) to similarly create appropriate advertiser metadata that defines advertiser information regarding the respective advertisers. In particular, advertiser workstations 734 access the backbone library via pipeline 718 to create advertiser metadata that defines the respective advertiser information by utilizing a format and nomenclature that is consistent throughout distribution system 110. The advertiser workstations 734 may then store the advertiser metadata onto storage server 744 through pipeline 718. In alternate embodiments, any desired number of advertiser workstations 734 may be supported by information service 118.

In the FIG. 7A embodiment, metadata server 730 combines the user metadata and the advertiser metadata into a combined metadata file that is typically stored on storage server 744 over pipeline 718. Metadata server 730 may also periodically update the user and advertiser information in the metadata file to reflect current conditions or the occurrence of new events. In the FIG. 7A embodiment, the various advertiser workstations 734 may then access and analyze the metadata file through pipeline 718 to create respective bid metadata that reflect advertising bids from the various advertisers to transmit advertising information to appropriate user devices 122. The advertiser workstations 734 then send their bid metadata to bid server 738 via pipeline 718.

In the FIG. 7A embodiment, bid server 738 analyzes the respective bid metadata from the various advertiser workstations 734 according to predefined bidding criteria to generate bid results that indicate one or more "winning" advertisers. The predefined bidding criteria may comprise any appropriate information, including, but not limited to, the relevance of advertised product(s) to a specific device user, the amount of the bids offered by advertisers, and the relative cost of advertised product(s).

In the FIG. 7A embodiment, bid server 738 sends the bid results to the advertiser workstations 734 over pipeline 718. In response, the winning advertiser(s) send the appropriate advertising information (ads) to ad server 538 via pipeline 718. Upon receiving the advertisements from the advertiser workstations 734, ad server 538 automatically pushes/transmits the advertising to the appropriate targeted user device(s) 122 by utilizing one or more appropriate transport structures 210 (FIG. 2). In certain embodiments, user devices 122 may communicate with various transport structures 210 via a distributed computer network like the Internet. Finally, the user device(s) 122 may display the pushed ads to corresponding device users in any appropriate manner. Further details regarding the implementation and utilization of information service 118 are discussed below in conjunction with FIGS. 7B-11.

Referring now to FIG. 7B, a block diagram for an alternate embodiment of the FIG. 1 information service 118 is shown, in accordance with one embodiment of the present invention. In alternate embodiments, information service 118 may be implemented by utilizing components and configurations in addition to, or instead of, certain of those components and configurations discussed in conjunction with the FIG. 7B embodiment. For example, in certain embodiments, some or all of the servers shown in the FIG. 7B embodiment may be implemented as respective banks of similar servers in order to accommodate a greater amount of data transmission and data processing by information service 118.

In the FIG. 7B embodiment, information service 118 includes one or more user devices 122, a transport server 518, a metadata server 730, one or more advertiser workstations 734, an ad server 538, and a storage server 744. In the FIG. 7B embodiment, certain elements of information service 118 communicate through an electronic pipeline 718. The FIG. 7B embodiment has a similar architecture to that disclosed above in conjunction with FIG. 7A. However, the FIG. 7B embodiment is implemented without the bid server 738 and the rendering servers 748 shown in the FIG. 7A embodiment. Devices in the FIG. 7B embodiment perform functions and operations that are the same or similar to those functions disclosed for the identically-numbered devices from the FIG. 7A embodiment. Further details regarding the implementation and utilization of information service 118 are discussed below in conjunction with FIGS. 8-11.

Referring now to FIG. 8, a block diagram for one embodiment of the ad server 538 of FIGS. 5, 7A, and 7B is shown, in accordance with the present invention. In the FIG. 8 embodiment, ad server 538 includes, but is not limited to, a central processing unit (CPU) 814, a memory 818, a display 838, and one or more input/output interface(s) (I/O interface(s)) 840. The FIG. 8 embodiment is presented for purposes of illustration, and in alternate embodiments, ad server 538 may be implemented using components and configurations in addition to, or instead of, certain of those components and configurations discussed in conjunction with the FIG. 8 embodiment.

In the FIG. 8 embodiment, CPU 814 may be implemented to include any appropriate and compatible microprocessor device that preferably executes software instructions to thereby control and manage the operation of ad server 538. The FIG. 8 display 838 may include any effective type of display technology including a cathode-ray-tube monitor or a liquid-crystal display device with an appropriate screen for displaying various information to a device user. In the FIG. 8 embodiment, I/O interface(s) 840 may include one or more input and/or output interfaces to receive and/or transmit any required types of information by ad server 538.

In the FIG. 8 embodiment, memory 818 may be implemented to include any combination of desired storage devices, including, but not limited to, read-only memory (ROM), random-access memory (RAM), and various types of non-volatile memory, such as floppy disks, memory sticks, compact disks, or hard disks. In the FIG. 8 embodiment, memory 818 includes, but is not limited to, a server application 822, a docking port 826, ads 830, and content 834.

In the FIG. 8 embodiment, server application 822 may include program instructions that are preferably executed by CPU 814 to perform various functions and operations for ad server 538. The particular nature and functionality of server application 822 typically varies depending upon factors such as the specific type and particular functionality of the corresponding ad server 538.

In the FIG. 8 embodiment, docking port 826 may include any effective interface means for ad server 538 to bi-directionally communicate with one or more transport structures 210 (FIG. 2) to transfer ads 830 and/or content 834. In the FIG. 8 embodiment, ads 830 include advertising information that is provided to ad server 538 from any appropriate entities, such as ad sources 540 (FIG. 5). Similarly, in the FIG. 8 embodiment, content 834 include electronic content that is provided to ad server 538 from any appropriate entities, such as content sources 542 (FIG. 5). Additional details for the implementation and utilization of transport structure 210 are further discussed below in conjunction with FIGS. 9-11.

Referring now to FIG. 9, a block diagram for one embodiment of the FIG. 2 metadata file 222 of transport structure 210 is shown, in accordance with the present invention. FIG. 9 metadata file 222 includes, but is not limited to, user metadata 922, device metadata 926, network metadata 930, advertiser metadata 934, content renderer metadata 938, and miscellaneous information. The FIG. 9 embodiment is presented for purposes of illustrations, and in alternate embodiments, metadata file 222 may be implemented by utilizing components and configurations in addition to, or instead of, certain of those components and configurations discussed in conjunction with the FIG. 9 embodiment.

In the FIG. 9 embodiment, each of the metadata categories includes information from one or more devices or entities from respective corresponding data-source types. For example, user metadata 922 may include information regarding one or more device users of user devices 122 (FIG. 1). In certain embodiments, user metadata 922 may be selectively compiled from one or more appropriate user profiles 430 (FIG. 4). Similarly, device metadata 926 may include information regarding one or more user devices 122. In certain embodiments, device metadata 926 may be selectively compiled from one or more appropriate device profiles 434 (FIG. 4). In the FIG. 9 embodiment, network metadata 930 may include information regarding various attributes or entities of electronic network 126 (FIG. 1).

In the FIG. 9 embodiment, advertiser metadata 934 may include information regarding one or more advertisers that are associated with distribution system 110. In certain embodiments, the advertisers may be associated with ad sources 540 (FIG. 5) or advertiser workstations 734 (FIG. 7). Similarly, content renderer metadata 938 may include information regarding one or more content renderers that are associated with distribution system 110. In certain embodiments, the content renderers may be associated with content sources 542 (FIG. 5) or rendering servers 748 (FIG. 7). Miscellaneous information 942 may include any additional data or other appropriate information.

Various entities in distribution system 110 may utilize the information in metadata file 222 in any appropriate manner. For example, an ad targeting procedure may be performed by matching compatible elements of user metadata 922, device metadata 926, and advertiser metadata 934 to thereby identify appropriate types of relevant advertising information for automatic transmission to targeted device users via transport structures 210. Further details regarding the implementation and utilization of the FIG. 9 metadata file 222 are discussed below in conjunction with FIGS. 10-11.

Referring now to FIG. 10, a flowchart of method steps for utilizing the FIG. 2 transport structure 210 is shown, in accordance with one embodiment of the present invention. The FIG. 10 flowchart is presented for purposes of illustration, and in alternate embodiments, the present invention may utilize steps and sequences other than those steps and sequences discussed in conjunction with the FIG. 10 embodiment.

In step 1014 of FIG. 10, a device user of a user device 122 registers for distribution services from distribution system 110 (FIG. 1) by utilizing any effective means. For example, in certain embodiments, the user device 122 may communicate with a transport server 518 of an information service 118 (FIG. 1) to perform an appropriate registration procedure. In step 1018, a transport structure 210 is activated to support the distribution services for the registered device user.

In step 1020, task instructions 212 are provided to the transport structure 210 in any effective manner. For example, in certain embodiments, transport server 518 may provide appropriate task instructions 212 for transport structure 210 depending upon the particular intended functionalities of transport structure 210. In step 1024, navigation instructions 216 are provided to the transport structure 210 in any effective manner. For example, in certain embodiments, transport server 518 may provide appropriate navigation instructions 216 for transport structure 210 depending upon the particular task instructions 212 of transport structure 210.

In step 1028, transport structure 210 begins to execute the first task from task instructions 212. In step 1032, if the current task of transport structure 210 has been completed, then in step 1036, transport structure 210 advances to the next task in task instructions 212. The FIG. 10 process then returns to step 1028 to execute the next task from task instructions 212. The FIG. 10 transport structure 210 may thus continue to iteratively execute a series of pending tasks from task instructions 212 as supported by navigation instructions 216.

For purposes of illustration, the FIG. 10 example is presented in the context of a single transport structure. However, in alternate embodiments, any desired number of additional transport structures 210 are equally contemplated. Furthermore, in accordance with the present invention, any type of electronic information may be transmitted by itself, or in combination with other information. For at least the foregoing reasons, the present invention therefore provides an improved system and method for effectively utilizing a transport structure in an electronic network.

Referring now to FIG. 11, a flowchart of method steps for maintaining the FIG. 10 transport structure 210 is shown, in accordance with one embodiment of the present invention. The FIG. 11 flowchart is presented for purposes of illustration, and in alternate embodiments, the present invention may utilize steps and sequences other than those steps and sequences discussed in conjunction with the FIG. 11 embodiment.

In step 1114 of FIG. 11, during execution of a current task instruction 212 from step 1028 of FIG. 10, a transport structure 210 utilizes a communication module 232 to communicate with a transport server 518 of distribution system 110. In step 1118, a transport structure (TS) manager 626 of transport server 518 determines whether there are any new instructions or information for transport structure 210. For example, the new instructions may include, but are not limited to, task instructions 212 and/or navigation instructions 216.

In no new instructions exist, then the FIG. 11 process returns to step 1036 of FIG. 10 where transport structure 210 advances to a next task instruction 212. However, if one or more new instructions exist, then in step 1122, TS manager 626 determines an instruction type for new instructions. In the FIG. 11 embodiment, if the new instructions include one or more new task instructions 212, then in step 1126, TS manager 626 updates the transport structure 210 to include any new task instructions 212.

Similarly, if the new instructions include one or more new navigation instructions 216, then in step 1130, TS manager 626 updates the transport structure 210 to include any new navigation instructions 212. The FIG. 11 process then returns to step 1036 of FIG. 10 where transport structure 210 advances to a next task instruction 212. Transport server 518 may thus repeatedly perform a transport structure (TS) update procedure to effectively update transport structure 210 with any new instructions or other required information.

The FIG. 11 embodiment describes TS update procedures that occur concurrently with the execution of each task instruction 212. However, any other frequency of TS update procedure is equally contemplated. For example, TS update procedures may occur at time intervals that are either greater or less than that shown in the FIG. 11 embodiment. Furthermore, TS update procedures may be non-periodic. For example, TS update procedures may be triggered by any appropriate event to occur at any desired time. For at least the foregoing reasons, the present invention provides an improved system and method for effectively utilizing a transport structure in an electronic network.

The invention has been explained above with reference to certain embodiments. Other embodiments will be apparent to those skilled in the art in light of this disclosure. For example, the present invention may readily be implemented using certain configurations and techniques other than those described in the specific embodiments above. Additionally, the present invention may effectively be used in conjunction with systems other than those described above. Therefore, these and other variations upon the discussed embodiments are intended to be covered by the present invention, which is limited only by the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A system for supporting an information distribution procedure, comprising:
user devices that device users utilize to communicate with an information service for receiving information distribution services;
a transport structure that communicates with said user devices, said transport structure collecting user metadata for providing selected information from said information service to targeted ones of said device users; and
a transport server that coordinates operations of said transport structure by providing task instructions and navigation instructions for operating said transport structure.

2. The system of claim 1 wherein said selected information includes advertising information and electronic content.

3. The system of claim 1 wherein said transport structure moves through a distribution network to collect said user metadata from said user devices, said transport structure also providing said selected information to said targeted ones of said device users.

4. The system of claim 1 wherein said user metadata includes a personal name, gender, age, religion, hobbies, interests, occupation, marital status, residence, income, Internet browsing history, and credit-card transaction records of said device users.

5. The system of claim 1 wherein said transport structure selectively collects device metadata and advertiser metadata in addition to said user metadata.

6. The system of claim 1 wherein said information service utilizes a push technique to automatically select and transmit only said selected information that is relevant to said device users in light of personal profile details provided in said user metadata.

7. The system of claim 1 wherein said selected information is targeted to said device users by matching aspects of said selected information to user characteristics from said user metadata.

8. The system of claim 1 wherein said transport structure includes said task instructions, said navigation instructions, a data handler, a format module, a metadata file, advertisements, electronic content, and a communication module.

9. The system of claim 1 wherein said transport server maintains a transport structure database that documents transactions performed by said transport structure and a current configuration of said transport structure.

10. The system of claim 1 wherein said transport server includes a home port at which said transport structure docks for said transport server to perform any required maintenance functions for said transport structure.

11. A user device comprising:
a device application that said user device utilizes to communicate with an information service for receiving information distribution services;
a transport structure that that communicates with said user device, said transport structure collecting user metadata for targeting selected information from said information service to a device user of said user device; and
a communication module that receives one or more advertisements from said information service, said one or more advertisements being targeted at said device user by utilizing said metadata, said communication module also receiving task instructions and navigation instructions from a transport server for operating said transport structure.

12. The user device of claim 11 wherein said user metadata includes a personal name, gender, age, religion, hobbies, interests, occupation, marital status, residence, income, Internet browsing history, and credit-card transaction records of said device users.

13. The user device of claim 11 wherein said transport structure selectively collects device metadata and advertiser metadata in addition to said user metadata.

14. The user device of claim 11 wherein said information service utilizes a push technique to automatically select and transmit only said selected information that is relevant to said device users in light of personal profile details provided in said user metadata.

15. The user device of claim 11 wherein said selected information is targeted to said device users by matching aspects of said selected information to user characteristics from said user metadata.
